## Europäisches Patentamt

## European Patent Office

## Office européen des brevets

(19)

(11) Veröffentlichungsnummer: **0 218 744**
**B1**

(12) **EUROPÄISCHE PATENTSCHRIFT**

(45) Veröffentlichungstag der Patentschrift:
**04.01.89**

(21) Anmeldenummer: **85113063.3**

(22) Anmeldetag: **15.10.85**

(51) Int. Cl.⁴: **B28D 7/02**, B23Q 11/00,
B23B 51/04, E21C 7/02

(54) Vorrichtung zum Herstellen eines kreiszylindrischen Durchbruches in einer Wandung, insbesondere Mauerwerkswandung.

(43) Veröffentlichungstag der Anmeldung:
**22.04.87 Patentblatt 87/17**

(45) Bekanntmachung des Hinweises auf die Patenterteilung:
**04.01.89 Patentblatt 89/1**

(84) Benannte Vertragsstaaten:
**AT BE CH DE FR GB IT LI LU NL SE**

(56) Entgegenhaltungen:
**AT-B- 230 252**
**DE-A- 2 912 396**
**DE-A- 3 049 268**
**DE-U- 8 200 668**
**US-A- 2 879 035**
**US-A- 3 033 298**
**US-A- 3 351 143**
**US-A- 3 788 423**

**SOVIET INVENTIONS ILLUSTRATED, Sektion Mechanik, Woche D17, 3. Juni 1981, Zusammenfassungsnr. D8226 D/17, Derwent Publications Ltd., London, GB**

(73) Patentinhaber: **Brockmann, Johannes,**
**Heimannstrasse 32, D-4250 Bottrop(DE)**

(72) Erfinder: **Ryborz, Werner, Fröbelstrasse 9,**
**D-4250 Bottrop(DE)**

(74) Vertreter: **Masch, Karl Gerhard et al, Patentanwälte**
**Andrejewski, Honke & Partner**
**Theaterplatz 3 Postfach 10 02 54, D-4300 Essen 1(DE)**

## Beschreibung

Die Erfindung betrifft eine Vorrichtung zum Herstellen eines kreiszylindrischen Durchbruches in einer Wandung, insbesondere Mauerwerkswandung, mit einem innenzentrierungslosen Kernbohrer, welcher am freien Ende einer Bohrhülse eine von radial nach innen sowie nach außen vorkragenden Schneidzähnen gebildete Bohrkrone und am gegenüberliegenden Ende einen Hülsenboden mit nicht axial, d.h. nicht mittig angeordneten Luftdurchlaßöffnungen sowie einem von einem Drehbohrwerk antreibbaren Werkzeugschaft aufweist und längsverschiebbar sowie drehbar, aber im wesentlichen druckdicht in einer Öffnung einer Hohlkammermanschette geführt ist, die einen der Wandung zugewandten dichtenden Anlagerand aus einem nachgiebigen Dichtungsprofil sowie einen an eine Absaugeinrichtung anschließbaren Kammerauslaß aufweist.

Bei einer bekannten Vorrichtung dieser Art (US-A 2 879 035) ist der Kernbohrer mit seinem Werkzeugschaft aus der Hohlkammermanschette herausgeführt, so daß die im Hülsenboden vorgesehenen Luftdurchlaßöffnungen gleichsam als Abluftöffnungen funktionieren, d.h. von der staubbeladenen Luft durchströmt werden, die von der Absaugeinrichtung aus der Bohrhülse in die Hohlkammermanschette und von dort zum Kammerauslaß befördert wird. Der Werkzeugschaft ist locker in der Öffnung der Hohlkammermanschette geführt, wodurch gleichsam Falschluft angesaugt und die auf den Bohrstaub ausgeübte Saugwirkung reduziert wird. Auf einem verminderten Durchmesser aufweisenden Mittelteil der dreiteiligen Bohrhülse ist ein L-Profilring angeordnet, dessen zur Bohrhülse paralleler Ringteil zur Bohrkrone hingerichtet ist sowie einen kleineren Aussendurchmesser als die Bohrkrone selber aufweist und dessen Radialflansch über Rippen an der betreffenden Wandung abstützbar ist und mit seiner ebenen Aussenseite als Anlagefläche für den dichtenden Anlagerand der Hohlkammermanschette dient. Zwischen dem L-Profilring und der Wandung wird dann Luft in die Durchbruchausnehmung eingesaugt, die unter Mitführung des Bohrstaubes in die Bohrhülse gelangt. Alles das funktioniert in der beschriebenen Art und Weise erst dann, wenn der Kernbohrer eine vorgegebene Bohrtiefe erreicht hat. Vorher findet überhaupt keine oder eine nur sehr unzuverlässige Kappselung des Bohrloches statt, so daß der Bohrstaub ohne weiteres in die Umgebung gelangt und diese verschmutzen kann.

Bei einer anderen Vorrichtung zum Herstellen eines kreiszylindrischen Durchbruches in einer Wandung ist es zwar auch schon bekannt (DE-U 8 200 668), den Kernbohrer mit der mit einem glattflächigen Außenmantel versehenen Bohrhülse aus der Hohlkammermanschette herauszuführen und zwischen der Bohrhülse und der Hohlkammermanschette eine Dichtung vorzusehen. Das konnte die vorstehenden Probleme einer Lösung nicht zuführen, weil hier mit einer Wasserzuführung über eine Zentralbohrung im Werkzeugschaft gearbeitet wird.

Der Erfindung liegt die Aufgabe zugrunde, eine Vorrichtung der eingangs genannten Art so weiter zu entwickeln, daß der Durchbruch ohne die Umgebung verschmutzenden Staubanfall hergestellt werden kann.

Die erfindungsgemässe Lösung dieser Aufgabe besteht darin, dass der Kernbohrer mit der mit einem glattflächigen Aussenmantel versehenen Bohrhülse aus der Hohlkammermanschette herausgeführt und zwischen der Bohrhülse und der Hohlkammermanschette eine Dichtung vorgesehen ist.

Durch die Herausführung der Bohrhülse aus der Hohlkammermanschette liegt die Luftdurchlaßöffnung im Hülsenboden nicht mehr innerhalb, sondern ausserhalb der Hohlkammermanschette. Die zum Kühlen der Bohrkrone und Abtransportieren des Bohrstaubes eingesetzte Luft nimmt daher genau den entgegengesetzten Weg. Sie strömt jetzt durch die Luftdurchlaßöffnung, die hier also als Luftzutrittsöffnung funktioniert, in die Bohrhülse, im Bohrloch längs der Innenwandung der Bohrhülse zwischen Aussenwandung der Bohrkrone sowie Bohrlochwandung und von dort über die durch die Dichtung gegen ein Ansaugen von Falschluft gesicherte Hohlkammermanschette zur Absaugeinrichtung. Überraschenderweise kann hierbei auf den L-Profilring vollständig verzichtet werden und ergibt sich gleichwohl zu keinem Zeitpunkt eine Staubabgabe an die Umgebung, weil die Hohlkammermanschette das Bohrloch von Anfang an umgibt.

Für die weitere Ausgestaltung bestehen im Rahmen der Erfindung mehrere Möglichkeiten. So weisen die mittig aufgesetzten Schneidzähne vorzugsweise eine radiale Erstreckung auf, die dem bis zum Vierfachen der Wandstärke der Bohrhülse entspricht, um den Transport des Bohrgutes durch die Luftströmung zu begünstigen. Der Bohrhülse wird man selbstverständlich eine Länge geben, die zumindest der größten Dicke der zu durchbohrenden Wandung entspricht. Der Kernbohrer kann ohne weiteres als integraler Bestandteil des Drehbohrwerkes ausgeführt sein; bevorzugt ist jedoch eine Ausführungsform, bei der der Kernbohrer mit rückwärtigem Spannschaft für ein Spannfutter des Drehbohrwerkes ausgeführt ist. Im übrigen empfiehlt es sich, das Hohlbohrwerkzeug und das daran angeschlossene Drehbohrwerk, das zweckmässigerweise aus einem Drehschlagbohrwerk besteht, gegenüber der Hohlkammermanschette zu führen. Zu diesem Zweck weist die Hohlkammermanschette vorzugsweise eine Führung zumindest für die Bohrhülse auf; diese kann vorteilhaft aus an der Hohlkammermanschette befestigten Zentrierungsrollen bestehen. Die Hohlkammermanschette und die Bohrhülse sind im einfachsten Fall durch eine einerseits an der Hohlkammermanschette befestigte, anderseits an der Bohrhülse anliegende ringförmige Lippendichtung gegeneinander abgedichtet. Da die Hohlkammermanschette zweckmässigerweise als starres Bauteil ausgeführt ist, empfiehlt es sich, den dichtenden Wandungsanlagerand von einem nachgiebigen Dichtungsprofil zu bilden. Vorzugsweise weist das Dichtungsprofil einen Saugnapfquerschnitt auf. Der Kammerauslass wird zweckmässigerweise als Anschlussstutzen für die Absaugeinrichtung ausgebildet. Sofern die Vorrichtung für das Herstellen von Durchbrüchen mit besonderes grossem Durchmesser eingerichtet und aus diesem Grunde grossbauend sowie unhandlich ist, empfiehlt es sich, die Hohlkammermanschette mit einem Fahrwerk zu versehen.

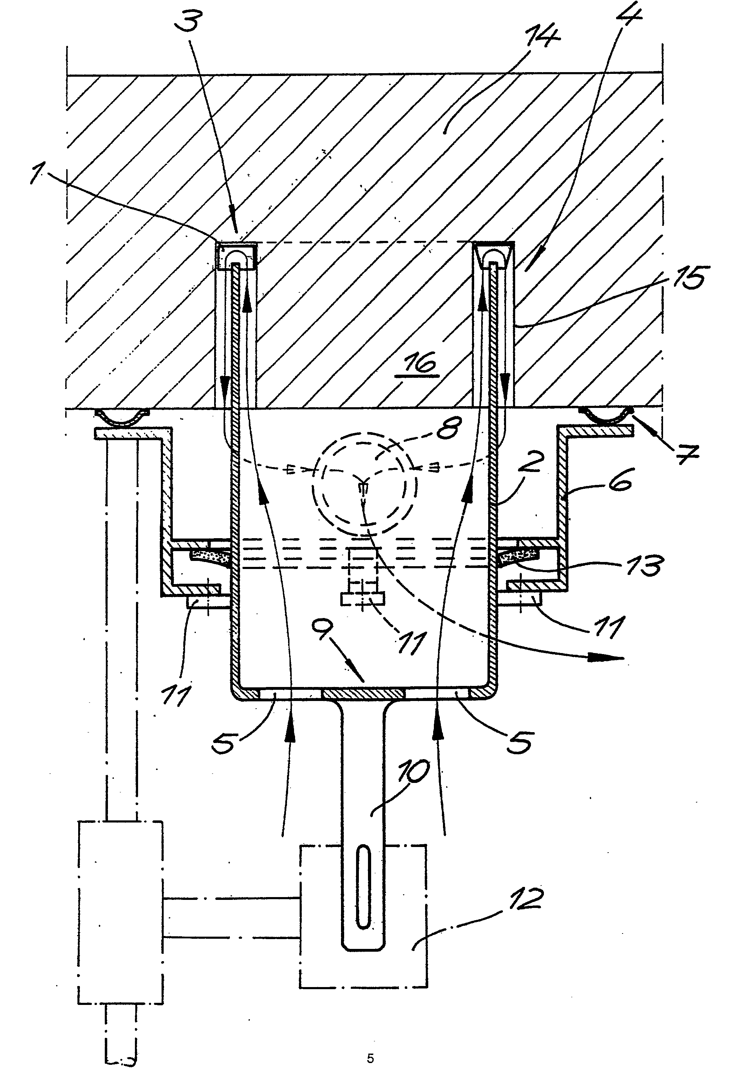

Im folgenden wird die Erfindung anhand einer ein Ausführungsbeispiel darstellenden Zeichnung näher erläutert, deren einzige Zeichnung schematisch im Längsschnitt eine Vorrichtung zum Herstellen eines kreiszylindrischen Durchbruches in einer Wandung, insbesondere Mauerwerkswandung, zeigt.

Die Vorrichtung arbeitet mit einem Hohlbohrwerkzeug, welches eine von Schneidzähnen 1 am freien Ende einer Bohrhülse 2 gebildete Bohrkrone 3 aufweist und von einem nicht dargestellten Drehbohrwerk antreibbar ist. Das Hohlbohrwerkzeug besteht aus einem innenzentrierungslosen Kernbohrer 4 mit gegenüber der Bohrhülse 2 radial nach innen sowie nach außen vorkragenden Schneidzähnen 1. Im Bereich des der Bohrkrone 3 abgewandten Endes der Bohrhülse 2 ist wenigstens eine Luftzutrittsöffnung 5 vorgesehen. Der Kernbohrer 4 ist mit seiner Bohrhülse 2 längsverschiebbar und daher, aber im wesentlichen druckdicht in einer Hohlkammermanschette 6 mit dichtendem Wandungsanlagerand 7 und mit an einer Absaugeinrichtung anschließbarem Kammerauslaß 8 angeordnet.

Die Bohrhülse 2 weist einen glattflächigen Innen- und Aussenmantel auf. Die mittig aufgesetzten Schneidzähne 1 weisen eine radiale Erstreckung auf, die etwa dem Vierfachen der Wandungsstärke der Bohrhülse 2 entspricht. Die Luftzutrittsöffnungen 5 sind in dem der Bohrkrone 3 abgewandten Boden 9 der Bohrhülse 2 angeordnet. Aus der Figur entnimmt man ohne weiteres, daß der Kernbohrer 4 mit rückwärtigem Spannschaft 10 für ein Spannfutter des Drehbohrwerkes ausgeführt ist, das zweckmäßigerweise als Drehschlagbohrwerk ausgebildet ist.

Die Hohlkammermanschette 6 weist eine Führung zumindest für die Bohrhülse 2 auf. Die Führung besteht zunächst aus an der Hohlkammermanschette 6 befestigten Zentrierungsrollen 11 für die Bohrhülse 2. Schematisch angedeutet ist eine weitere Führung, und zwar Axialführung 12 für das Drehbohrwerk. Die Hohlkammermanschette 6 und die Bohrhülse 2 sind jedenfalls durch eine Lippendichtung 13 gegeneinander abgedichtet, die einerseits an der Hohlkammermanschette 6 befestigt ist und andererseits an der Bohrhülse 2 anliegt. Der dichtende Wandungsanlagerand 7 ist von einem nachgiebigen Dichtungsprofil mit saugnapfähnlichem Querschnitt gebildet. Der Kammeranschluss 8 ist als Anschlußstutzen ausgebildet. Die Hohlkammermanschette 6 ist noch mit einem Fahrwerk versehen, was im einzelnen aber nicht dargestellt ist.

Zum Herstellen eines Durchbruches in einer Mauerwerkswandung 14 wird die Hohlkammermanschette 6 mit dem darin gehaltenen Kernbohrer 4 an der entsprechenden Stelle an die Wandung 14 angesetzt. Wird nun die an den Kammerauslaß 8 angeschlossene Absaugeinrichtung in Betrieb gesetzt, so saugt sich die Hohlkammermanschette 6 an der Wandung 14 fest an, woraufhin das Drehschlagbohrwerk in Betrieb gesetzt werden kann. Es wird nunmehr in der Wandung 14 vom Kernbohrer 4 eine hohlzylindrische Ausnehmung 15 erzeugt. Der von den Schneidzähnen 1 freigesetzte Bohrstaub wird durch die Luft, die über die Luftzutrittsöffnungen 5 in die Bohrhülse 2 und von dort in die hohlzylindrische Ausnehmung 15 einströmt, über den Kammerauslaß 8 abgesaugt. Ist die Wandung 14 vollkommen durchbohrt, kann der staubfreie Bohrkern 16 ohne weiteres entfernt werden.

## Patentansprüche

1. Vorrichtung zum Herstellen eines kreiszylindrischen Durchbruches in einer Wandung, insbesondere Mauerwerkswandung, mit einem innenzentrierunglosen Kernbohrer, welcher am freien Ende einer Bohrhülse (2) eine von radial nach innen sowie außen vorkragenden Schneidzähnen (1) gebildete Bohrkrone (3) und am gegenüberliegenden Ende einen Hülsenboden mit nicht mittig angeordneten Luftdurchlaßöffnungen (5) sowie einen von einem Drehbohrwerk antreibbaren Werkzeugschaft (10) aufweist und längsverschiebbar sowie drehbar, aber im wesentlichen druckdicht in einer Öffnung einer Hohlkammermanschette (6) geführt ist, die einen der Wandung zugewandten dichtenden Anlagerand (7) aus einem nachgiebigen Dichtungsprofil sowie einen an eine Absaugeinrichtung anschließbaren Kammerauslaß aufweist, dadurch gekennzeichnet, daß der Kernbohrer (4) mit der mit einem glattflächigen Außenmantel versehenen Bohrhülse (2) aus der Hohlkammermanschette (6) herausgeführt und zwischen der Bohrhülse (2) und der Hohlkammermanschette (6) eine Dichtung (13) vorgesehen ist.

2. Vorrichtung nach Anspruch 1, dadurch gekennzeichnet, dass die mittig aufgesetzten Schneidzähne (1) eine radiale Erstreckung aufweisen, die dem bis zum Vierfachen der Wandstärke der Bohrhülse (2) entspricht.

3. Vorrichtung nach Anspruch 1 oder 2, dadurch gekennzeichnet, daß die Hohlkammermanschette (6) zumindest für die Bohrhülse (2) eine Führung aufweist.

4. Vorrichtung nach Anspruch 3, dadurch gekennzeichnet, daß die Führung aus an der Hohlkammermanschette (6) befestigten Zentrierungsrollen (11) besteht.

5. Vorrichtung nach einem der Ansprüche 1 bis 4, dadurch gekennzeichnet, daß das Dichtungsprofil einen Saugnapfquerschnitt aufweist.

6. Vorrichtung nach einem der Ansprüche 1 bis 5, dadurch gekennzeichnet, daß die Hohlkammermanschette (6) mit einem Fahrwerk versehen ist.

## Claims

1. An appliance for the production of a cylindrical hole in a wall, particularly a masonry wall (14), with a centreless core bit that possesses at its free end a drilling shell (2), a cutter head (3) consisting of cutting teeth (1) projecting radially both inwardly and outwardly, and at the opposite end a shell base with off-centre air flow openings (5) and a tool shaft (10) drivable by a drilling machine and movable longitudinally and rotatable under basically pressure-tight conditions, being guided in an opening of a hollow-chambered sleeve (6) that possesses, facing the wall, a sealing enclosure edge (7) with flexible sealing profile and also has a chamber outlet that is connectable to a suction equipment, characterized in that the core bit (4) is withdrawn from the hollow-chambered sleeve (6) by means of the drilling shell (2) that possesses a smooth outer convex surface, and a seal (13) is provided between the drilling shell (2) and the hollow-chambered sleeve (6).

2. An appliance according to claim 1, characterized in that the cutting teeth (1) are mounted at their centres and extend radially by up to four times the wall thickness of the drilling sheel (2).

3. An appliance according to claim 1 or 2, characterized in that the hollow-chambered sleeve (6) has a guidance means for at least the drilling flange (2).

4. An appliance according to claim 3, characterized in that the guidance means consists of centralizing rollers (11) fastened to the hollow-chambered sleeve (6).

5. An appliance according to one of claims 1 to 4, characterized in that the sealing profile has a suction cup cross section.

6. An appliance according to one of claims 1 to 5, characterized in that the hollow-chambered sleeve (6) is equipped with an undercarriage.

## Revendications

1. Dispositif pour aménager un perçage cylindrique dans un mur, notamment un mur en maçonnerie, comprenant un trépan non soumis à un centrage intérieur, qui comporte, sur l'étrémité libre d'une douille de perçage (2), une couronne de perçage (3) comportant des dents de coupe (1) faisant saillie radialement vers l'intérieur et vers l'extérieur, et, sur l'éxtrémité opposée, est muni d'ouvertures (5) de passage pour l'air, non disposées dans une position centrale, ainsi que d'une tige d'outil (10) pouvant être entraînée par une perforatrice rotative et est guidé de façon à pouvoir se déplacer longitudinalement et à tourner, mais d'une manière sensiblement étanche à la pression, dans une ouverture d'un manchon (6) délimitant une cavité, qui possède un bord d'appui (7) qui est tourné vers le mur, réalise l'étanchéité, est constitué par un profilé d'étanchéité flexible et comporte une sortie pouvant être raccordée à un dispositif d'aspiration, caractérisé en ce que le trépan ressort, ainsi que la douille de perçage (2) équipée d'une enveloppe extérieure de surface lisse, hors du manchon à cavité (6) et qu'une garniture d'étanchéité (13) est prévue entre la douille de perçage (2) et le manchon à cavité (6).

2. Dispositif selon la revendication 1, caractérisé en ce que les dents de coupe (1) montées en position centrée possèdent une étendue radiale correspondant au quadruple de l'épaisseur de la paroi de la douille de perçage (2).

3. Dispositif selon la revendication 1 ou 2, caractérisé en ce que le manchon à cavité (6) possède un guide au moins pour la douille de perçage (2).

4. Dispositif selon la revendication 3, caractérisé en ce que le guide est constitué par des galets de centrage (11) fixés au manchon à cavité (6).

5. Dispositif selon l'une des revendications 1 à 4, caractérisé en ce que le profil d'étanchéité possède une section transversable en forme de ventouse.

6. Dispositif selon l'une des revendications 1 à 5, caractérisé en ce que le manchon à cavité (6) comporte un mécanisme de déplacement.